# EUROPÄISCHE PATENTSCHRIFT

(11) **EP 1 874 476 B1**
(45) Veröffentlichungstag und Bekanntmachung des Hinweises auf die Patenterteilung: **15.07.2009**
(21) Anmeldenummer: 06742233.7
(22) Anmeldetag: 10.04.2006
(51) Int. Cl.: B03B 9/06, B03B 5/28, B03B 7/00

(54) **VERFAHREN UND VORRICHTUNG ZUR ENTSORGUNG VON ABFALL**
WASTE DISPOSAL METHOD AND DEVICE
PROCEDE ET DISPOSITIF POUR L'ELIMINATION DES DECHETS

(30) Priorität: 14.04.2005 DE 102005017334
(43) Veröffentlichungstag der Anmeldung: 09.01.2008
(73) Patentinhaber: Orawetz, Uta, 82 362 Weilheim (DE)
(72) Erfinder: ORAWETZ, Ronald, 82362 Weilheim (DE)
(74) Vertreter: Müller, Thomas
(86) Internationale Anmeldenummer: PCT/DE2006/000632
(87) Internationale Veröffentlichungsnummer: WO 2006/108393

(56) Entgegenhaltungen:
- EP-A- 0 243 747
- DE-C1- 4 130 416
- US-A- 5 297 742

## Beschreibung

Abfall war in früheren Zeiten ein religiöser oder politischer Begriff. So definiert ein Lexikon aus dem Jahre 1732 den Begriff " Abfall " als Untreue gegenüber dem, welchem man mit Pflichten verbunden ist. Ein Abfall kann sowohl gegen Gott als auch gegen Menschen geschehen.

Aufgrund des Mangels an Rohstoffen und Düngemitteln waren später Abfälle lange Zeit als Ausgangsmaterialien hoch geschätzt.
Von Abfällen als unerwünschten Rohstoffen ist erstmals in der Hochindustrialisierung im späten 19. Jahrhundert die Rede. Zu den Abfällen rechnet man die Nebenprodukte, welche den Fabriken oft höchst lästig werden.
Ab dem 20. Jahrhundert umfasst der Abfallbegriff neben den industriellen Reststoffen schließlich auch die Reststoffe die der zunehmenden Urbanisierung zuzuschreiben sind, wie Abwasser und Müll. Deren Beseitigung erfolgte zu Beginn mittels relativ einfacher Methoden. Man lagerte Müll einfach auf abgelegenen, sonst nicht nutzbaren Plätzen ab (Meyers Konversationslexikon von 1924).
Die aktuelle Definition im Duden lautet dagegen: "Reste, die bei der Zubereitung oder Herstellung von etwas übrig bleiben, nicht weiter zu verwenden sind und weggeworfen werden". Diese Definition ist das Resultat der massiven Steigerung der Stoff - und Güterströme sowie deren zunehmend problematischen Zusammensetzung nach Ende des 2. Weltkrieges. Erst damals ergab sich die Notwendigkeit, Abfälle in großem Stil entsorgen zu müssen.
Und erst in den 70er und 80er Jahren des vorigen Jahrhunderts wuchs die Erkenntnis, dass die ungeordnete Abfallbeseitigung massive Umweltschäden und Gesundheitsrisiken verursachen kann und deshalb die Entsorgung der Abfälle geregelt werden muss.

Im Zeitalter der Nachhaltigkeit gewinnen neue, ganzheitliche Denkansätze an Gewicht. Künftige abfallpolitische Leitlinien müssen zwar zwingend und in erster Linie die bisherigen ökologischen Standards erhalten bzw. verbessern helfen, sie müssen aber auch Rahmenbedingungen schaffen
a) für eine ökonomisch optimierte und effiziente Abfallwirtschaft,
b) zu einer weitergehenden Liberalisierung der Abfallwirtschaft,
c) für eine verbesserte Aufgabenteilen zwischen Bund, Ländern und Gemeinden,
d) zur vermehrten Ausrichtung der Entsorgung auf die Bedürfnisse von Bürgern, Industrie und Gewerbe,
e) anhand derer sich die Abfallpolitik künftig in eine übergeordnete, nachhaltige Ressourcenpolitik einfügen lässt und dieser die zu ihrer Umsetzung erforderlichen Impulse geben kann.

Wie in vielen anderen Bereichen gibt es auch in der Abfallwirtschaft noch ein erhebliches Steigerungspotential bei der ökonomischen Effizienz und Optimierung. Damit die Gemeinden und Entsorgungskörperschaften diese Potentiale nutzen können, sind sie auf stabile Rahmenbedingungen angewiesen. Dies gilt umso mehr als Abfallentsorgungsanlagen sehr kapitalintensiv sind und nur dann sinnvoll abgeschrieben werden können, wenn die langfristige Nutzung sichergestellt ist.

Viele Dinge des täglichen Bedarfs landen im Abfall bzw. Müll.
Pro Jahr und pro Kopf der Bevölkerung fällt hier eine Menge mit dem Gewicht von fast einer halben Tonne an. Das bedeutet nicht nur die Vernichtung von Rohstoffen, sondern auch von Energie. Knapp ein Drittel der Siedlungsabfälle ist organisch, also kompostierbar. Neues Glas das aus Altglas gewonnen wird, benötigt zur Herstellung ein Viertel weniger Energie. Die Hälfte des zum Beispiel in der Schweiz hergestellten Papiers stammt aus Altpapier. Das zeigt, dass es keinen Sinn macht unsere Abfallberge einfach zu verbrennen, sondern dass es besser ist durch eine sinnvolle Aufbereitung Rohstoffe und Energie zu sparen.

Deshalb sind schon seit langem technische Verfahren und Vorrichtungen zur Aufbereitung von Haushalts- Gewerbe- und anderen dergleichen Abfällen bekannt, die sich mit der Lösung dieses Problems beschäftigen.

So ist aus der EP 0 243 747 B1 ein solches Verfahren bekannt.
Diesem Verfahren liegt die Aufgabe zugrunde, ein ebenfalls schon bestehendes Verfahren zu vereinfachen, insbesondere den erforderlichen Aufwand zu verringern. Bei diesem Verfahren wird neben einer aus magnetischen Mineralien bestehenden Fraktion und einer Granulatfraktion wenigstens eine Leichtfraktion aus den Abfällen gebildet, die alle Verfahrensstufen durchlaufen und erst am Ende des Verfahrens entsteht. Da in vorliegenden Abfällen die leichten Bestandteile den größten Anteil der Abfälle ausmachen, wobei zu berücksichtigen ist, dass Papier und Verpackungsmaterialien ca. 40% des Abfalls ausmachen, ist dieses Verfahren mit einem erheblichen Arbeits-, Energie-, und Zeitaufwand und somit erheblichen Betriebskosten verbunden.
Zur Lösung dieser Aufgabe wird in der EP 0 243 747 B1 ein Verfahren zur Aufbereitung von Haushalts-, Gewerbe- und anderen dgl. Abfällen zwecks Gewinnung eines Faser- und/oder Granulatmaterials vorgeschlagen, bei welchem das Abfallmaterial einer Vorzerkleinerung, einer Magnetscheidung, einer Sichtung, einer Trocknung und einer Fraktionierung unterworfen wird. Hierbei wird die bei der im Anschluss an die Magnetscheidung in einer Absaugeinheit durchgeführte Sichtung anfallende Leichtfraktion einer schneidenden, und die anfallende Schwerfraktion einer vorwiegend granulierenden, Nachzerkleinerung unterworfen. Danach werden die beiden Zerkleinerungsprodukte wieder zusammengeführt, getrocknet und in Fasergut und Granulat fraktioniert.
Als besondere Maßnahme wird bei diesem Verfahren vor der Absaugeinheit in einem der Absaugkanäle ein erster Teilstrom, oder der Gesamtstrom des betreffenden Absaugkanals und/oder unmittelbar vor der scheidenden Nachzerkleinerungseinheit ein zweiter Teilstrom oder der Gesamtstrom der Leichtfraktion abgezweigt. Hierbei wird der erste Teil - oder Gesamtstrom der Weiterverwertung unmittelbar, oder nach Zerkleinerung, in einer weiteren Zerkleinerungseinheit der Weiterverwertung zugeführt und der zweite Teil- oder Gesamtstrom der zweiten Nachzerkleinerungseinheit zugeführt.
Die aus der zweiten Nachzerkleinerungseinheit gelangende Fraktion wird dann weiter einer Brikett- oder Pelletpresse zugeführt und zu Briketts und/oder Pellets verarbeitet.
Bei diesem Verfahren wird die Gewinnung von Energie aus dem Abfallgut und deren Verwendung im Aufbereitungsverfahren nicht berücksichtigt.

Des Weiteren ist aus der EP 0 479 293 A1 ein Verfahren und eine Vorrichtung zur Aufbereitung von metallhaltigen Müllkomponenten bekannt.
Das Verfahren besteht darin, dass man mit einem Überbandmagneten selektiv leichtes Eisenmaterial und mit einem Trommelmagneten schwereres Eisenmaterial entfernt. Das verbleibende Material wird durch Windsichten in eine leichtere Fraktion und eine schwerere Fraktion aufgetrennt, Die leichtere Fraktion, die insbesondere Kunststofffolien, Aluminiumfolien und Papier umfasst, wird zerkleinert und einem Aspirateur zugeführt. Der Aspirateur ist mit zwei Sieben und einem Windsichter ausgestattet, so dass die Auftrennung des eingetragenen Materials in eine Kunststofffraktion, Aluminiumfraktion und in eine Fraktion ermöglicht wird, die Schwermetallpartikel umfasst.
Diese Druckschrift behandelt lediglich das Problem metallhaltiger Müllkomponenten. Gesichtspunkte der Aufbereitung anderer Abfallkomponenten oder der Energiegewinnung fehlen.

In der US 5 297 742 A ist ein weiteres Verfahren zum Aufbereiten von Abfall offenbart, bei dem der Abfall in einer Flüssigkeit suspendiert und bei dem die Bestandteile in dem resultierenden Abfallbrei in voneinander untersch8iedliche Anteile abhängig von ihrer Dichte und/oder ihrer magnetischen Eigenschaften oder anderen Merkmalen getrennt werden.

Aus der EP 1 188 491 A1 ist ein Verfahren zum Aussortieren eines Kunststoffgemisches aus einem Abfallgemisch und eine Abfallsortieranlage bekannt. Bei diesem Verfahren wird das technische Problem gelöst, ein im Wesentlichen aus Kunststoffobjekten bestehendes Kunststoffgemisch mit geringen Anteilen an Störstoffen auszusortieren. Hierzu wird aus einem Abfallgemisch zunächst eine zumindest Kunststoffobjekte und Getränkekartons aufweisende Abfallfraktion aussortiert. Zu diesem Zweck werden aus der Abfallfraktion Getränkekartons aussortiert und aus der um die Getränkekartons reduzierten Abfallfraktion wird mit Hilfe eines Ballistikseparators das Kunststoffgemisch als Schwerfraktion abgetrennt. Das technische Problem wird auch dadurch gelöst, dass zusätzlich oder separat zu den Getränkekartons Metall enthaltende Objekte der Abfallfraktion entzogen werden, bevor diese dem Ballistkseparator zugeführt werden.
Auch hier wird lediglich ein Teilproblem der Abfallentsorgung angesprochen. Hinweise auf eine Gewinnung von Energie fehlen.

Der Erfindung liegt deshalb die Aufgabe zugrunde, die Abfallentsorgung möglichst umfassend und unter Berücksichtigung energetischer Prozesse zu bewerkstelligen.

Diese Aufgabe wird durch ein Verfahren nach Anspruch 1, sowie eine Vorrichtung nach Anspruch 10 gelöst.

Ein wesentlicher Aspekt bei dem erfindungsgemäßen Verfahren besteht darin, dass der anfallende Abfall in einem bestimmten Verfahrensschritt getrocknet wird, wobei die für den Trocknungsvorgang benötigte Energie durch die Abwärme einer Turbine geliefert wird, die selbst der Energieerzeugung dient.

Die bei dem Trocknungsvorgang anfallenden Ascheteile und Stäube behindern jedoch die Bildung von Pellets im weiteren Verfahren, da sie deren Heizwert herabsetzen. In der Verfahrensstufe, die dem Trocknungsvorgang folgt, sorgt die erfindungsgemäße Vorrichtung deshalb für die Beseitigung dieser Ascheteile.
Im Folgenden wird die Erfindung näher beschrieben.

Es zeigen im Einzelnen:
Figur 1 den Ablauf des erfindungsgemäßen Verfahrens,
Figur 2 die erfindungsgemäße Trocknungsvorrichtung,

Aus der Praxis der Sortierung von Abfallgemischen ist bekannt, ein Abfallgemisch welches vorher bereits Sortierschritte durchlaufen haben kann, auf ein laufendes Förderband aufzubringen und mittels des Förderbandes an Sensor- und Diskriminatorvorrichtungen entlangzuführen. Dabei werden durch die Sensor- und Diskriminatorvorrichtungen bestimmte Eigenschaften von einzelnen Bestandteilen des Abfallgemischs gemessen. Dies kann beispielsweise durch Reflexion oder Absorption von elektromagnetischer Strahlung in verschiedenen Frequenzbereichen, so zum Beispiel im Röntgen- oder nahen Infrarotbereich, geschehen. Ebenso ist eine Messung von Eigenschaften der einzelnen Abfallbestandteile durch optische Erkennung von Farben und Formen möglich. Bei Vorliegen einer gewünschten Eigenschaft eines Bestandteils des Abfallgemischs wird eine der Sensor- oder Diskriminatorvorrichtung in Transportrichtung des Bandes nachgeordnete Austragvorrichtung aktiviert, die mittels Druckluft das identifizierte Bestandteil in eine im Bereich eines Aufnahmeschachtes endende ballistische Flugbahn überführt. Diejenigen Bestandteile des Abfallgemischs, denen keine gewünschte Eigenschaft zugeordnet wurde, erfahren keinen derartigen Austrag und verbleiben auf dem Förderband, von wo sie meist in einen Aufnahmeschacht zur Aufnahme einer bestimmten Sortierfraktion abkippen.

Das erfindungsgemäße Verfahren wird im Folgenden in seinem prinzipiellen Ablauf beschrieben.

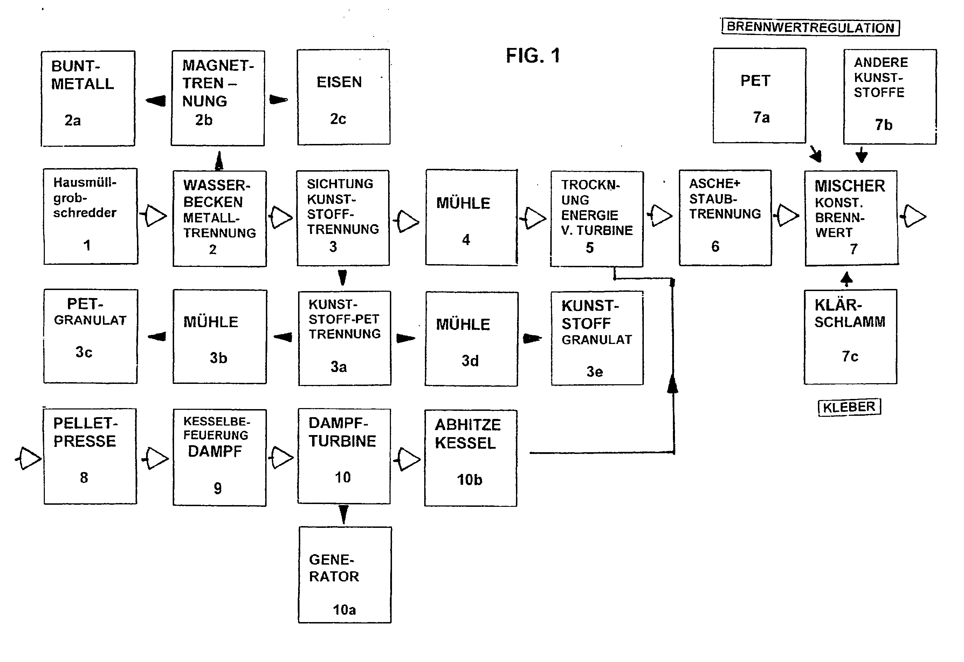

In dem Ablaufdiagramm der Figur 1 ist mit (1) die Stufe beschrieben, bei der der jeweilige Abfall oder Hausmüll auf ein Förderband gekippt wird und in Stufe (2) in ein Wasserbecken zur Abtrennung von Bestandteilen aus Metall verbracht wird.

Durch die Verfahrensstufe (2b) wird die Aussortierung über Magnete und die Verbringung in einen Aufnahmeschacht für Buntmetalle (2c) und einen weiteren für Eisen (2c) dargestellt.
Weiter wird in der Verfahrensstufe (3) in einem Wasserbecken die Sichtung und Abtrennung von Kunststoffen durchgeführt.
Hier wird durch die Verfahrensstufe (3a) die Absonderung und Aufteilung in den Kunststoff PET (Polyethylenterephthalat) und andere Kunststoffe symbolisiert.
Mit (3b) bzw. (3d) ist jeweils eine Mühle bezeichnet, die die betreffenden Kunststoffe zu Granulat vermahlt und anschließend in den Aufnahmeschacht (3c) für PET - Granulat bzw. den Aufnahmeschacht (3e) für Granulat aus anderen Kunststoffen verbringt.
Der von den beschriebenen Bestandteilen befreite Abfall durchläuft die weitere Mühle (4) und gelangt in eine Trocknungsstufe (5), die ihre hauptsächliche Wärmeenergie durch die Abwärme der Stufe (10b) erhält.
Für die weitere Bearbeitung des Abfalls, der in den Folgestufen zu Pellets gepresst und verbrannt wird, ist es erforderlich die bei der Trocknung anfallende Aschebestandteile und Staubanteile zu entfernen. Denn diese Bestandteile können nicht mehr verbrannt werden und behindern somit den Vorgang der Energiegewinnung aus den brennbaren Bestandteilen.

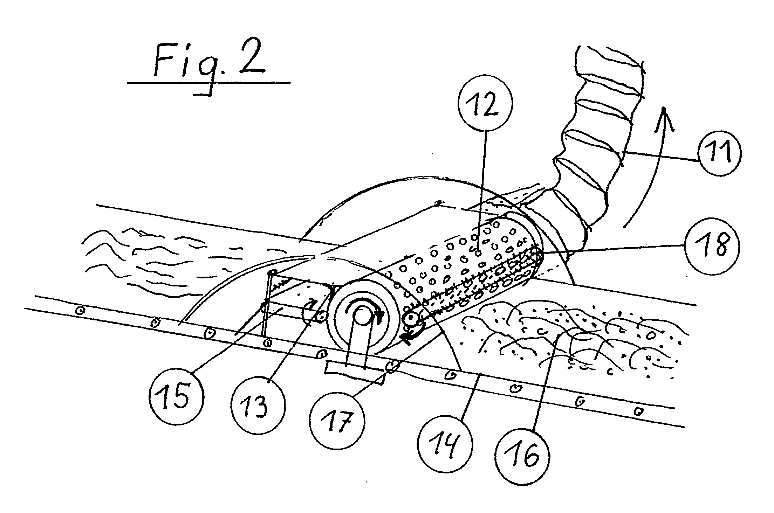

Die erfindungsgemäße Vorrichtung (6) zur Absonderung dieser Asche - und Staubanteile ist in Figur 2 gezeigt.

In der Mischerstufe (7) wird das oben beschriebene PET - Granulat ( symbolisiert durch den Funktionsblock (7a) ) sowie das Granulat aus den anderen Kunstofffraktionen ( symbolisiert durch den Funktionsblock (7b) zusammen mit Klärschlamm ( symbolisiert durch den Funktionsblock (7c)) vermischt. Anschließend werden diese drei Bestandteile in der Pelletpresse (8) zu Pellets verpresst und in dem Dampfkessel (9) verbrannt.

Mit dem so erzeugten Wasserdampf wird eine Dampfturbine (10) betrieben, die über einen Generator (10a) elektrischen Strom und Abwärme (10b) erzeugt, mit der wiederum die Trocknungsstufe (5) betrieben wird.

In der Mischstufe (7) wird sichergestellt, dass der Brennwert der für die Kesselbefeuerung verwendeten Pellets in einem bestimmten Bereich konstant bleibt. Das wird durch eine entsprechende Steuerung der drei Bestandteile PET - Granulat, Granulat aus anderen Kunststofffraktionen und Klärschlamm erreicht.

Im Folgenden werden die wichtigsten Eigenschaften von Klärschlamm erläutert. Klärschlamm fällt in einer Kläranlage an verschiedenen Stellen der Abwasserreinigung an. Durch seinen hohen Nährstoffgehalt eignet er sich als Bodenverbesserungsmittel und findet unter anderem als solcher Anwendung in der Landwirtschaft. Wegen des hohen Gehalts an Schwermetallen im Klärschlamm muss die Aufbringung auf Böden streng kontrolliert werden. Zwar ist die Schwermetallbelastung des Abwassers, und damit auch des Klärschlamms, stark zurückgegangen, eine natürliche Schwermetallbelastung wird man jedoch immer finden. Zurückgegangen ist die Menge an Schwermetallen vor allem durch die Einführung des bleifreien Benzins, sowie durch das Nutzen von Tankstellen und Waschanlagen zur Autowäsche. Das bei der Autowäsche anfallende Schmutzwasser kann dort durch Ölabscheider vorgereinigt werden.
Die Abwässer und damit die Klärschlämme enthalten Rückstände von Arzneimitteln, Diagnostika und Desinfektionsmitteln, da diese durch biologische Reinigungsprozesse nicht abgebaut werden können.
Bei der thermischen Verwertung des Klärschlamms soll dieser als Brennstoff genutzt werden. Jeder Brennstoff besteht prinzipiell aus den Stoffgruppen Wasser, Brennbarem ( vorwiegend organische Substanzen ) und Asche ( anorganische Substanzen ). Klärschlamm ist aufgrund seines hohen Wassergehalts von mehr als 90 M.-% nicht unmittelbar als Brennstoff geeignet, das heißt er muss vor einer thermischen Behandlung oder Verwendung stark entwässert bzw. getrocknet werden.

Im Folgenden wird PET näher beschrieben.
PET ( Polyethylenterephthalat ) kann man stark vereinfacht als veredeltes Erdöl beschreiben. Die flüssigen Ausgangsprodukte Ethylenglykol und Terephthalat - Verbindungen werden aus Erdöl gewonnen, das teilweise mit Sauerstoff umgesetzt wurde. Zur Herstellung von PET werden diese Ausgangsverbindungen zu langen Kettenmolekülen verbunden. Chemisch ausgedrückt heißt das, Ethylenglykol und die Terephthalat - Verbindungen werden miteinander polykondensiert. Dabei werden die zunächst kurzkettigen Ausgangsmoleküle, die ausschließlich aus den Elementen Kohlenstoff, Sauerstoff und Wasserstoff bestehen, durch so genannte Esterbindungen aneinandergehängt. Diesem Vorgang verdankt der Kunststoff auch seinen Namen: "Poly" (viele) und "ester" (für die Art der Bindung). Durch die Verlängerung der Ketten wird das material immer zähflüssiger, bis man am Ende der Polykondensation die gewünschte Konsistenz erhält.
PET ist im Prinzip "ein alter Bekannter", denn das Grundmaterial wurde schon 1941 als Polyester in den USA entwickelt. Um PET für Verpackungen herzustellen, die dann später als Abfall mit entsorgt werden müssen, wird das PET - Granulat einem zusätzlichen Veredelungsschritt unterzogen, bei dem unter anderem die mechanischen Eigenschaften des Kunststoffs weiter verbessert werden.

In Figur 2 ist im Detail die Verfahrensstufe (6) zur Absonderung der Asche - und Staubanteile des in der Trocknungsstufe (5) getrockneten Abfalls aufgezeigt.

Hierin ist mit (11) der Absaugschlauch, der mit einer nicht dargestellten Luftabsaugvorrichtung verbunden ist, und mit (12) die Absaugtrommel bezeichnet. Die Absaugtrommel (12) besteht aus einem zylinderförmigen mit Löchern bzw. lochartigen Öffnungen versehenen Rotationskörper, der quer zur Laufrichtung des, den getrockneten Abfall befördernden, Förderbands (14) in einer einstellbaren Höhe angebracht ist.
Der mit Asche behaftete Abfall nähert sich in der Figur 2 auf der rechten Seite und ist hier mit (16) bezeichnet.

Parallel zur Längsachse der Absaugtrommel (12) ist auf der einen Seite eine Abstreifvorrichtung (13) und auf der anderen Seite eine Rotationsbürste (18), die der Reinigung der Absaugtrommel dient, angeordnet. Die Drehrichtung der Absaugtrommel (12) ist entgegen der Laufrichtung des Förderbands (14). Die Drehrichtung der Rotationsbürste (18) ist wiederum entgegengesetzt der Drehrichtung der Absaugtrommel (12).
Unter der Abstreifvorrichtung (13) verläuft in gleicher Richtung das Austragsband (15). Über der gesamten beschriebenen Vorrichtung ist ein Staubschutzgehäuse (17) angebracht, das dafür sorgt, dass der größte Teil der Asche durch den Absaugschlauch (11) abgeführt wird. Zur Erhöhung des Wirkungsgrades der Absauganlage ist erfindungsgemäß vorgesehen, dass der Absaugstrom gepulst wird.

### Bezugszeichenliste

- (1): Eingangsstufe des Abfalls (Hausmüll)
- (2): Wasserbecken zur Metalltrennung (2a, 2b, 2c, Buntmetall, Eisen)
- (3): Wasserbecken zur Kunststofftrennung (3a bis 3e, PET, andere Arten)
- (4): Mühle
- (5): Trocknungsstufe
- (6): Aschetrennung
- (7): Mischstufe (7a,7b,7c Mischungsbestandteile )
- (8): Pelletpresse
- (9): Kesselfeuerung
- (10): Dampfturbine (10a Generator, 10b Abwärme)
- (11): Absaugschlauch
- (12): Absaugtrommel
- (13): Abstreifvorrichtung
- (14): Förderband
- (15): Austragband für Abstreifvorrichtung
- (16): Mit Asche versetzter Abfall
- (17): Staubschutzgehäuse
- (18): Rotationsbürste

## Patentansprüche

1. Verfahren zur Entsorgung von Abfall mit den folgenden Verfahrensschritten:
a) Abtrennung der Metall - Bestandteile,
b) Abtrennung von Mineralien + Reste und der Kunststoffbestandteile, sowie deren Separierung als Granulat,
c) Trocknung des verbliebenen Abfalls,
d) Befreiung des getrockneten verbliebenen Abfalls von Asche,
e) Mischung des aschefreien Abfalls mit Kunststoff - Granulat und Klärschlamm in einem einstellbaren Verhältnis
f) Pressung des Mischprodukts zu Pellets,
g) Verbrennung der Pellets zur Energiegewinnung

2. Verfahren nach Anspruch 1,
**dadurch gekennzeichnet,**
**dass** die gewonnene Energie zur Trocknung des Abfalls verwendet wird.

3. Verfahren nach Anspruch 1,
**dadurch gekennzeichnet,**
**dass** die gewonnene Energie zur Befeuerung eines Dampfkessels und dem Betrieb einer Dampfturbine betrieben wird.

4. Verfahren nach Anspruch 1,
**dadurch gekennzeichnet,**
**dass** die gewonnene Energie zur Befeuerung eines Dampfkessels und dem Betrieb einer Dampfturbine betrieben wird,
wobei die Dampfturbine einen Stromgenerator betreibt und die Abwärme zur Trocknung des Abfalls verwendet wird.

5. Verfahren nach einem der Ansprüche 1 bis 4,
**dadurch gekennzeichnet,**
**dass** die als Granulat vorliegenden Kunststoffbestandteile aufgetrennt sind in Bestandteile die aus PET bestehen und Bestandteile die aus anderen Kunststoffen bestehen.

6. Verfahren nach einem der Ansprüche 1 bis 5,
**dadurch gekennzeichnet,**
**dass** das Mischungsverhältnis der aschefreien Abfall - Bestandteile, der Kunststoffbestandteile und des Klärschlamms zur Einstellung des Brennwerts der Pellets dient.

7. Verfahren nach Anspruch 6,
**dadurch gekennzeichnet,**
**dass** der Brennwert der Pellets konstant gehalten wird.

8. Verfahren nach einem der Ansprüche 1 bis 6,
**dadurch gekennzeichnet,**
**dass** der Klärschlamm zusätzlich zur Einstellung des Feuchtigkeitsgehalts und des Zusammenhalts der Pellets dient.

9. Verfahren nach einem der Ansprüche 1 bis 8,
dass es sich bei dem Abfall um Hausmüll und hausmüllähnlichen Industriemüll handelt.

10. Vorrichtung zur Entsorgung von Abfall mit den folgenden Merkmalen in der Reihenfolge des Ablaufs:
a) einem Hausmüllgrobschredder (1) einem Wasserbecken (2, 2a,2b,2c) zur Abtrennung von Metall - Bestandteilen,
b) einem Wasserbecken ( 3) zur Abtrennung von Kunststoffbestandteilen und Mineralien + Reste, Siebung
c) Mühlen (3b, 3d) zur Verarbeitung der Kunststoffbestandteile zu Granulat,
d) einer Mühle (4) zur Zerkleinerung des verbliebenen Abfalls,
e) einer Trocknungsstufe (5) zur Trocknung des verbliebenen zerkleinerten Abfalls,
f) einer Trennstufe (6) zur Befreiung des getrockneten Abfalls von Asche,
g) einer Mischstufe (7) zur Mischung des aschefreien Abfalls mit Kunststoff - Granulat und Klärschlamm in einem einstellbaren Verhältnis,
h) einer Presse (8) zur Formung des Mischprodukts in Pellets
i) einer Stufe zur Verbrennung (9) der Pellets zur Energiegewinnung.

11. Vorrichtung zur Entsorgung von Abfall nach Anspruch 10,
**dadurch gekennzeichnet, '**
**dass** die Verbrennungsstufe (9) die Energie für die Trocknungsstufe (5) liefert.

12. Vorrichtung zur Entsorgung von Abfall nach Anspruch 10,
**dadurch gekennzeichnet,**
**dass** die Verbrennungsstufe (9) die Energie für den Betrieb eines Dampfkessels und einer Dampfturbine liefert.

13. Vorrichtung zur Entsorgung von Abfall nach Anspruch 10,
**dadurch gekennzeichnet,**
**dass** die Verbrennungsstufe (9) die Energie für den Betrieb eines Dampfkessels und einer Dampfturbine liefert,
wobei die Abwärme die Energie für die Trocknungsstufe (5) liefert.

14. Vorrichtung nach einem der Ansprüche 10 bis 14,
**dadurch gekennzeichnet,**
**dass** die Mühlen (3b, 3d) PET - Granulat und Granulat aus den Bestandteilen des verbliebenen Kunststoffs liefern.

15. Vorrichtung nach einem der Ansprüche 10 bis 14,
**dadurch gekennzeichnet,**
**dass** die der Trocknungsstufe (5) nach geschaltete Trennstufe (6) mit einem Luftstrom arbeitet der impulsartig betrieben wird.

16. Vorrichtung nach einem der Ansprüche 10 bis 15,
**dadurch gekennzeichnet,**
**dass** die Mischstufe (7) das Mischungsverhältnis der aschefreien Abfall - Bestandteile, der Kunststoffbestandteile und des Klärschlamms so einstellt, dass der Brennwert der Pellets konstant bleibt.

17. Vorrichtung nach einem der Ansprüche 10 bis 16,
**dadurch gekennzeichnet,**
**dass** die Mischstufe (7) das Mischungsverhältnis der aschefreien Abfall - Bestandteile, der Kunststoffbestandteile und des Klärschlamms so einstellt, dass der Klärschlamm zur Einstellung des Feuchtigkeitsgehalts und des Zusammenhalts der Pellets dient.

18. Vorrichtung nach einem der Ansprüche 10 bis 17,
**dadurch gekennzeichnet,**
**dass** sie zur Entsorgung von Hausmüll und hausmüllähnlichem Industriemüll dient.

## Claims

1. Waste disposal method, which comprises the following stages:
(a) separating of metallic components,
(b) separating of minerals + residues and plastic components and separating them as granulates,
(c) drying of remaining waste,
(d) removing of ash from dried remaining waste,
(e) mixing of ash-free waste with granular plastic material and sewage sludge at an adjustable ratio,
(f) shaping of mixed product into pellets
(g) burning of pellets to generate power.

2. Method according to claim 1,
**characterized in that**
the power generated by burning pellets is used to dry the waste.

3. Method according to claim 1,
**characterized in that**
the power generated by burning pellets is used to heat a steam boiler and to operate a steam turbine.

4. Method according to claim 1,
**characterized in that**
the power gained by burning pellets is used to heat the steam boiler and to operate the steam turbine, wherein the steam turbine serves to operate a generator and the waste heat of the steam turbine is used to dry the waste.

5. Method according to any of the claims 1 to 4,
**characterized in that**
the plastic components processed into granulate are separated into PET material and plastic material of other kinds.

6. Method according to any of the claims 1 to 5,
**characterized in that**
the mixing ratio of ash-free components, plastic components and sewage sludge serves to adjust the calorific value of pellets.

7. Method according to claims 5,
**characterized in that**
the calorific value of pellets is kept constant.

8. Method according to any of the claims 1 to 6,
**characterized in that**
the sewage sludge also serves to adjust the moisture content of pellets and to hold them together.

9. Method according to any of the claims 1 to 8,
**characterized in that**
the waste to be disposed is household waste and household-like industrial waste.

10. Waste disposal device comprising the following characteristics, listed in the order of process stages:
(a) a coarse separator and a water basin for separating metallic components,
(b) a water basin for separating plastic components and minerals + remaining waste, screening,
(c) mills for processing the plastic components into granulate,
(d) a mill for comminuting the remaining waste,
(e) a drying stage for drying the comminuted remaining waste,
(f) a stage for removing ashes from the dried waste,
(g) a mixing stage for mixing the ash-free waste with plastic granulate and sewage sludge at an adjustable ratio,
(h) a press for shaping the mixed product into pellets,
(i) a stage for burning the pellets in order to generate power.

11. Device according to claim 10,
**characterized in that**
the power required for the drying stage is supplied by the combustion stage.

12. Device according to claim 10,
**characterized in that**
the power for operating the steam boiler and the steam turbine is supplied by the combustion stage.

13. Device according to claim 10,
**characterized in that**
the power for operating the steam boiler and the steam turbine is supplied by the combustion stage, wherein the power required for carrying out the drying stage is supplied by the waste heat of the steam turbine.

14. Device according to any of the claims 10 to 14,
**characterized in that**
the mills ((c) in claim 10) serve to process the plastic components into PET granulate and granulate of remaining plastic material.

15. Device according to any of the claims 10 to 14,
**characterized in that**
the separating stage following the drying stage is carried out by using an air stream generated impulsively.

16. Device according to any of the claims 10 to 15,
**characterized in that**
ash-free waste, plastic granulate and sewage sludge are mixed in the mixing step at an adjustable ratio so that the calorific value of pellets is remained constant.

17. Device according to any of the claims 10 to 16,
**characterized in that**
the mixing ratio of ash-free waste, plastic granulate and sewage sludge is adjusted so that the sewage sludge serves to set the moisture content of pellets and hold them together.

18. Device according to any of the claims 10 to 17,
**characterized in that**
it serves to dispose household waste and household-like industrial waste.

## Revendications

1. Procédé pour l'élimination des déchets avec les étapes de procédé suivantes consistant à :
a) séparer les composants métalliques,
b) séparer les minéraux + les restes et les composants synthétiques, ainsi que les séparer comme granulat,
c) sécher les déchets résiduels,
d) libérer les déchets résiduels séchés des cendres,
e) mélanger les déchets exempts de cendre avec du granulat synthétique et des boues de curage dans une proportion réglable,
f) presser le produit mélangé pour former des pellets,
g) brûler les pellets pour obtenir de l'énergie.

2. Procédé selon la revendication 1, **caractérisé en ce que** l'énergie obtenue est utilisée pour le séchage des déchets.

3. Procédé selon la revendication 1, **caractérisé en ce que** l'énergie obtenue est utilisée pour la mise à feu d'une chaudière à vapeur et le fonctionnement d'une turbine à vapeur.

4. Procédé selon la revendication 1, **caractérisé en ce que** l'énergie obtenue est utilisée pour la mise à feu d'une chaudière à vapeur et le fonctionnement d'une turbine à vapeur, la turbine à vapeur faisant fonctionner une génératrice et la chaleur perdue étant utilisée pour le séchage des déchets.

5. Procédé selon l'une quelconque des revendications 1 à 4, **caractérisé en ce que** les composants synthétiques présents sous la forme de granulat sont séparés en composants qui se composent de PET et en composants qui se composent d'autres matières synthétiques.

6. Procédé selon l'une quelconque des revendications 1 à 5, **caractérisé en ce que** le rapport de mélange des composants des déchets exempts de cendre, des composants synthétiques et des boues de curage sert au réglage de la puissance calorifique des pellets.

7. Procédé selon la revendication 6, **caractérisé en ce que** la puissance calorifique des pellets est maintenue constante.

8. Procédé selon l'une quelconque des revendications 1 à 6, **caractérisé en ce que** les boues de curage servent en outre au réglage de la teneur en humidité et de la solidarisation des pellets.

9. Procédé selon l'une quelconque des revendications 1 à 8, **caractérisé en ce qu'**il s'agit pour les déchets, d'ordures ménagères et de déchets industriels semblables aux ordures ménagères.

10. Dispositif pour l'élimination de déchets avec les caractéristiques suivantes dans l'ordre de déroulement :
a) un dispositif de déchiquetage grossier des ordures ménagères (1), un bassin (2, 2a, 2b, 2c) pour la séparation des composants métalliques,
b) un bassin (3) pour la séparation des composants synthétiques et des minéraux + des restes, criblage
c) des broyeurs (3b, 3d) pour la transformation des composants synthétiques en granulat,
d) un broyeur (4) pour le broyage des déchets résiduels,
e) une étape de séchage (5) pour le séchage des déchets broyés, résiduels,
f) une étape de séparation (6) pour la libération des déchets séchés des cendres,
g) une étape de mélange (7) pour le mélange des déchets exempts de cendre avec le granulat synthétique et les boues de curage dans une proportion réglable,
h) une presse (8) pour la formation du produit mélangé en pellets,
i) une étape de combustion (9) des pellets pour obtenir de l'énergie.

11. Dispositif pour l'élimination des déchets selon la revendication 10, **caractérisé en ce que** l'étape de combustion (9) fournit l'énergie pour l'étape de séchage (5).

12. Dispositif pour l'élimination des déchets selon la revendication 10, **caractérisé en ce que** l'étape de combustion (9) fournit l'énergie pour le fonctionnement d'une chaudière à vapeur et d'une turbine à vapeur.

13. Dispositif pour l'élimination des déchets selon la revendication 10,
**caractérisé en ce que** l'étape de combustion (9) fournit l'énergie pour le fonctionnement d'une chaudière à vapeur et d'une turbine à vapeur, la chaleur perdue fournissant l'énergie pour l'étape de séchage (5).

14. Dispositif selon l'une quelconque des revendications 10 à 14, **caractérisé en ce que** les broyeurs (3b, 3d) fournissent du granulat de PET et du granulat des composants de matière synthétique résiduelle.

15. Dispositif selon l'une quelconque des revendications 10 à 14, **caractérisé en ce que** l'étape de séparation (6) postérieure à l'étape de séchage (5) travaille avec un courant d'air qui est utilisé par impulsions.

16. Dispositif selon l'une quelconque des revendications 10 à 15, **caractérisé en ce que** l'étape de mélange (7) règle le rapport de mélange des composants des déchets exempts de cendre, des composants synthétiques et des boues de curage de sorte que la puissance calorifique des pellets reste constante.

17. Dispositif selon l'une quelconque des revendications 10 à 16, **caractérisé en ce que** l'étape de mélange (7) règle le rapport de mélange des composants des déchets exempts de cendre, des composants synthétiques et des boues de curage de sorte que les boues de curage servent au réglage de la teneur en humidité et de la solidarisation des pellets.

18. Dispositif selon l'une quelconque des revendications 10 à 17, **caractérisé en ce qu'**il sert à l'élimination des ordures ménagères et déchets industriels semblables aux ordures ménagères.
